**Europäisches Patentamt**

**European Patent Office**

**Office européen des brevets**

(19)

(11) Veröffentlichungsnummer: **0 133 879**

**B1**

(12) # EUROPÄISCHE PATENTSCHRIFT

(45) Veröffentlichungstag der Patentschrift:
**13.01.88**

(51) Int. Cl.⁴: **G 01 B 21/30**, G 01 B 5/28,
G 01 B 7/34

(21) Anmeldenummer: **84106377.9**

(22) Anmeldetag: **05.06.84**

(54) Einrichtung zur Oberflächenprüfung plattenförmiger Werkstücke.

<table>
<tr><td>(30) Priorität: <strong>07.06.83 US 502057</strong></td><td>(73) Patentinhaber: <strong>International Business Machines Corporation, Old Orchard Road, Armonk, N.Y. 10504 (US)</strong></td></tr>
<tr><td>(43) Veröffentlichungstag der Anmeldung:<br><strong>13.03.85 Patentblatt 85/11</strong></td><td rowspan="2">(72) Erfinder: <strong>Darves- Bornoz, Yves, Patrick Drive, Route No. 1, LaGrangeville New York 12540 (US)</strong><br>Erfinder: <strong>Melvin, George Edward, 3 Colburn Drive, Poughkeepsie New York 12603 (US)</strong><br>Erfinder: <strong>Ryan, Michael Gerald, 186 Grand Avenue, Poughkeepsie New York 12603 (US)</strong><br>Erfinder: <strong>Saylor, Dennis Lee, Harden Drive Box 197, LaGrangeville New York 12540 (US)</strong></td></tr>
<tr><td>(45) Bekanntmachung des Hinweises auf die Patenterteilung:<br><strong>13.01.88 Patentblatt 88/2</strong></td></tr>
<tr><td>(84) Benannte Vertragsstaaten:<br><strong>DE FR GB</strong></td><td rowspan="2">(74) Vertreter: <strong>Brügel, Gerhard, Dipl.- Ing., IBM Deutschland GmbH Schönaicher Strasse 220, D-7030 Böblingen (DE)</strong></td></tr>
<tr><td>(56) Entgegenhaltungen:<br>DE-B-1 178 612<br>DE-B-2 130 025<br>DE-U-1 994 156<br><br>IBM TECHNICAL DISCLOSURE BULLETIN Band 23, Nr. 4, September 1980, New York, USA; G.T. DAVIS et al."Greensheet-flattening mechanism for use in manufacture of multilayer ceramic products", Seiten 1333-1334<br>IBM TECHNICAL DISCLOSURE BULLETIN Band 12, Nr. 11, April 1970; New York, USA; R.R. GARNACHE "Manual inspection technique for surface protrusions", Seite 1897<br>IBM TECHNICAL DISCLOSURE BULLETIN Band 14, Nr. 7, Dezember 1971, New York, USA; R. PASCUAL "Checking disk surfaces", Seiten 2130</td></tr>
</table>

EP 0 133 879 B1

## Beschreibung

Die Erfindung betrifft eine Einrichtung zur Prüfung plattenförmiger Werkstücke auf Partikel, die aus der Oberfläche der Werkstücke heraustragen, mit einer Grundplatte und einem beweglichen Haltekopf mit einer unteren Anlagefläche zur Zufuhr und Entnahme der Werkstücke auf die bzw. von der Oberfläche der Grundplatte, vergleiche IBM Technical Disclosure Bulletin, Band 12, Nr 11, April 1970, S. 1897. Ein bevorzugtes Anwendungsgebiet der Erfindung ist die Überprüfung von ungebrannten keramischen Folien, wie sie fuer die Herstellung integrierter Schaltungsmoduln benoetigt werden, auf darauf befindliche Partikel.

Für die Herstellung von integrierten Schaltungen müssen die ungebrannten keramischen Folien einer Vielzahl von Prozessen ausgesetzt werden, wie Ausstanzen, Lochen, Auftragen des gewünschten Schaltungsmusters in Form einer leitenden Paste und Schichten zu einem Mehrschichtmodul. Das Material dieser Folien ist, solange sie nicht gebrannt sind, flexibel und weich und neigt dazu, daß sich auf der Oberfläche Partikel befinden, speziell keramische Restpartikel, die vom Ausstanzen oder Lochen herrühren und auf der weichen Oberfläche leicht haften. Derartige Partikel werden sodann während der weiteren Behandlung der Folien beim Transport, etwa mittels eines Vakuum- oder Bernoulli-Kopfes, von Station zu Station mit transportiert.

Besondere Probleme bereiten diese Partikel, wenn die ungebrannten Folien zum Auftragen des Leitungsmusters mit einer leitenden Paste beschichtet werden. Hierbei wird nämlich eine dünne Maske aufgesetzt und die Paste aufgestrichen, und eventuell vorhandene Partikel der vorgenannten Art verursachen dabei entsprechende Einkerbungen in die Maske, was bei den sehr feinen Mustern dazu führen kann, daß die Maske unbrauchbar wird. Denn bei der nachfolgenden Bildung von Mehrschicht-Keramik-Körpern kommt es auf eine sehr genaue Ausrichtung der Schichten untereinander an, und hierbei kann eine solchermaßen beschädigte Maske zur Folge haben, daß die Leitungsverbindungen zwischen den Schichten gestört sind.

Ein weiterer Gesichtspunkt ist, daß solche Partikel überhaupt die zuverlässige Herstellung des leitenden Musters beeinträchtigen, und wenn dies nicht auf eine sichere Art festgestellt werden kann, kann man dies erst bei nachfolgenden Qualitätskontrollen feststellen. Nicht entdeckte Partikel können somit sowohl die Maske als auch das Werkstück unbrauchbar machen.

Nach dem Stand der Technik ist es bekannt, zur Vermeidung der aufgezeigten Folgen mittels einer Anordnung mit Grundplatte und dazu ausrichtbarem beweglichem Haltekopf einen solchen Druck auf die ungebrannte Folie auszuüben, daß sich die Partikel in die Folie eindrücken, um auf diese Weise die Oberfläche des Werkstücks zu ebnen (IBM Technical Disclosure Bulletin Bd. 23, Nr. 4, Seite 1333/34). Bei dieser Maßnahme kann aber nicht das Vorhandensein von Partikeln auf der Werkstückoberfläche festgestellt werden, sondern man geht davon aus, daß auf allen Werkstücken solche Partikel vorhanden sind und preßt sie systematisch ein. Der Nachteil dieses Verfahrens ist, daß infolge der aufgewendeten Auflagekraft häufig das Ablösen des Werkstücks von der Auflagefläche erschwert ist. Außerdem bedingt dieses Verfahren einen zusätzlichen Bearbeitungstakt und zusätzlichen apparativen Aufwand, da die Halteköpfe für Werkstücke dieser Art an sich generell nur dafür gestaltet sind, die Folien aufzunehmen, zu transportieren und abzusetzen, also zur Aufnahme nennenswerter Kräfte gar nicht vorgesehen sind.

Die optische Prüfung von Werkstückoberflächen, wie z. B. von Halbleiterwafern, auf über die Fläche hinausragende Teilchen ist aus IBM Technical Disclosure Bulletin Bd. 12, Nr. 11, Seite 1897 bekannt. Dabei wird eine Maske auf das Werkstück gesetzt und Vakuum zugeführt, und eventuell vorhandene Partikel bewirken entsprechende Verspannungen in der Maske, die mittels polarisierten Lichtes optisch analysiert und auf einer Fläche schaubildlich dargestellt werden können. Das Ergebnis muß somit mit dem menschlichen Auge geprüft werden, was bei großen Partikeln, abgesehen von dem zeitlichen Aufwand, zu einem befriedigenden Ergebnis führen kann, jedoch bei kleinen Partikeln in der Größenordnung von 25 bis 50 $\mu$ unzureichend ist.

Durch die DE-B-1 178 612 ist ein Verfahren zur Messung der Abweichung der Flachheit eines Körpers von einem vorgegebenen Wert bekannt, bei dem auf magnetischem Wege die Luftspalte zu der Körperoberfläche gemessen werden.

Aus der DE-U-1 994 156 ist eine Vorrichtung zum Messen der Verwindung und Krümmung keramischer Platten bekannt, die aus einem Meßkopf mit drei Fühlstiften besteht. Die Auslenkungen der Fühlstifte ist ein Maß für die Krümmung der Platten.

Sowohl das bekannte Verfahren als auch die bekannte Vorrichtung sind nur in der Lage, Verwindungen zu messen, nicht aber festzustellen, ob aus einer Oberfläche störende Partikel herausragen.

Eine weitere Methode zur Feststellung von Unregelmäßigkeiten auf ebenen Oberflächen ist im IBM Technical Disclosure Bulletin Bd. 14, Nr. 7, Seite 2130 beschrieben und speziell für die Prüfung der Oberfläche von Magnetspeicherplatten gedacht. Hier wird auf einen Prüfkopf eine dünne Kupferschicht aufgetragen, und der so präparierte Kopf reibt auf der Oberfläche, so daß aus der Fläche hervorstehende Bereiche mit Kupfer beschichtet werden und sodann mikroskopisch untersucht werden können. Auch dieses Verfahren ist offensichtlich sehr zeitaufwendig, denn es muß die gesamte Plattenoberfläche mikroskopisch abgesucht werden, und dementsprechend unwirtschaftlich und unzuverlässig.

Der Erfindung liegt die Aufgabe zugrunde, eine Vorrichtung der eingangs beschriebenen Art zu schaffen, die im Takt des Herstellungsverfahrens für solche Werkstücke eingesetzt werden kann und so effektiv ist, daß auf der Oberfläche eines Werkstücks befindliche Partikel, bevor das Werkstück der nächsten Bearbeitungsstation zugeführt wird, zuverlässig festgestellt werden können, so daß das Werkstück entnommen und zwischenzeitlich gereinigt werden kann. Diese Aufgabe ist mittels der im Patentanspruch 1 beschriebenen Vorrichtung gelöst worden.

Die Erfindung ermöglicht eine selbsttätige Feststellung von Partikeln, die aus der Oberfläche solcher Werkstücke herausragen, und solchermaßen identifizierte Werkstücke können aus dem Transportweg entnommen werden, bevor in einer der nachfolgenden Stationen die Maske für das Auftragen des leitenden Musters aufgelegt wird. Damit ist eine Beschädigung der Maske verhindert und deren Lebensdauer verlängert. Ein weiterer Vorteil der erfindungsgemäßen Vorrichtung ist, daß der Prozeßablauf nicht gestört oder unterbrochen wird, da das als fehlerhaft identifizierte Werkstück ohne weiteres entnommen werden kann, um nach seiner Reinigung erneut dem Prozeß zugeführt zu werden. Schließlich ist auch von Vorteil, daß der für den Transport von Station zu Station verwendete Haltekopf auch für den Prüfvorgang eingesetzt wird. Nur in dem Sonderfall, wenn sich Partikel an der Fläche des Haltekopfes selbst oder auf der Auflagefläche der Grundplatte befinden, muß die Anordnung zur Reinigung vorübergehend stillgesetzt werden.

Ausführungsbeispiele der Erfindung werden nachfolgend anhand der Zeichnungen beschrieben. Es zeigen:

Fign. 1A bis 1D schematische Schnittdarstellungen einer ersten Ausführungsform für verschiedene Fälle, nämlich

Fig. 1A die Vorrichtung vor dem Aufsetzen des Haltekopfes auf die Grundplatte,

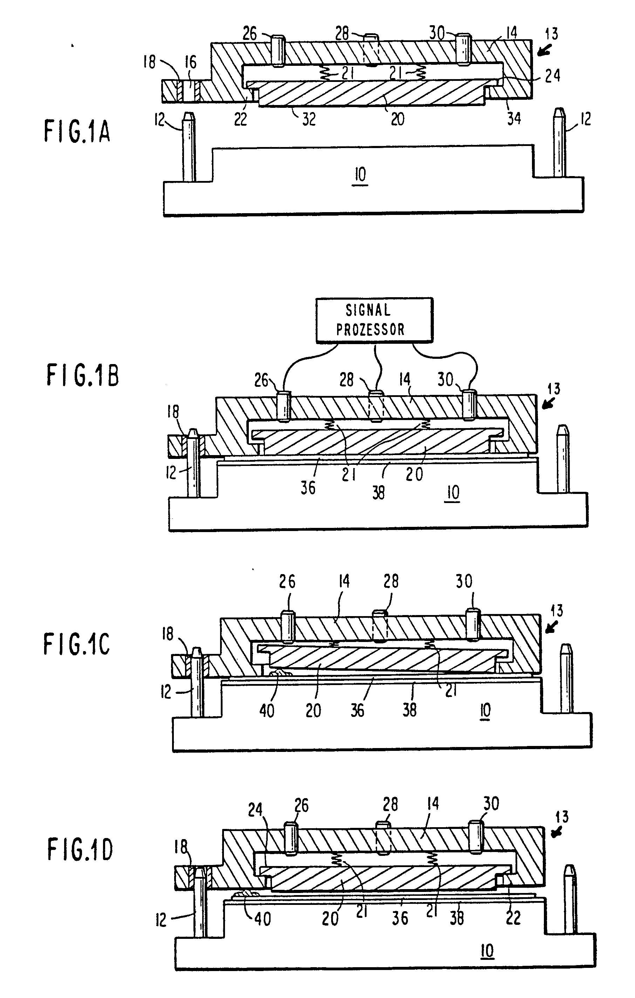

Fig. 1B den aufgesetzten Haltekopf mit einem Werkstück ohne Partikel auf der Oberfläche,

Fig. 1C die Position der Teile gemäß Fig. 1B, jedoch bei innerhalb der aktiven Fläche des Werkstücks befindlichem Partikel und

Fig. 1D die entsprechende Position der Teile bei Feststellung eines Partikels, der sich im inaktiven Randbereich der Werkstückoberfläche befindet;

Nach Fig. 1A ist eine Grundplatte 10 mit Stiften 12 versehen, von denen in der Zeichnung zwei Stifte dargestellt sind, jedoch kann eine unterschiedliche Anzahl vorgesehen werden, wie sie für die zuverlässige Ausrichtung der einzelnen Teile der dargestellten Vorrichtung erforderlich ist. Die Grundplatte 10 ist als Station in der Fertigungslinie für ungebrannte keramische Folien vorgesehen, wobei ein Haltekopf 13 zur Aufnahme, zum Transport und zur Ablage der einzelnen Werkstücke dient. Hierfür wird dem Haltekopf 13 Unterdruck zugeführt, oder die Entnahme der Werkstücke erfolgt nach dem Bernoulli-Prinzip.

Der Haltekopf 13 besteht aus einem Haltejoch 14 mit Bohrungen 16, in denen sich Buchsen 18 zur reibungsfreien Führung des Haltekopfs 13 auf den Stiften 12 der Grundplatte 10 befinden. Der Haltekopf 13 enthält weiter eine im Haltejoch 14 geführte Sensorplatte 20 mit einem Flansch 24 am Umfang, der auf einem entsprechenden Flansch 22 des Haltejoches 14 aufliegt. Im Haltejoch 14 sind eine Mehrzahl Abtastelemente 26, 28, 30 angeordnet, welche die Entfernung der oberen Fläche der Sensorplatte 20 zur unteren Fläche des Haltejoches 14 feststellen und entsprechende Signale abgeben. Die untere Anlagefläche 32 der Sensorplatte 20 steht infolge der Gestaltung der Flansche 22 und 24 um ein bestimmtes Maß über die untere Fläche 34 des Haltejoches hinaus, solange die Flanschen 22 und 24 einander anliegen.

Fig. 1B zeigt die Position des Haltejoches 14 mit der Sensorplatte 20 in Wirklage, wobei sich auf dem Werkstück 36, hier als ungebrannte Keramikfolie angenommen, kein Partikel befindet. Das Werkstück 36 ist auf einer Filmschicht 38, und diese auf der Grundplatte 10 gelagert. Das Werkstück 36 enthält eine Vielzahl von Durchgangslöchern, und die Filmschicht 38 verhindert, daß auf das Werkstück aufgetragene Substanz, z. B. leitende Paste, auf die Grundplatte 10 gelangt. Da, wie erwähnt, sich auf der Oberfläche des Werkstücks 36 kein Partikel befindet, liegt die Sensorplatte 20 gleichmäßig auf dem Werkstück 36 auf. Daher geben die Abtastelemente 26, 28 und 30 einheitliche Signale ab, die einem Signalprozessor zugeführt werden und anzeigen, daß die Abstände zwischen dem Haltejoch 14 und der Sensorplatte 20 einheitlich sind. Federn 21 zwischen dem Haltejoch 14 und der Sensorplatte 20 dienen dazu, die Sensorplatte 20 jeweils in engem Kontakt mit dem Werkstück 36 zu halten bzw., wenn der Haltekopf 13 abgehoben ist (Fig. 1A), die Teile in der dort dargestellten Position miteinander anliegenden Flanschen 22 und 24 zu halten.

Wie Fig. 1C zeigt, befindet sich dort auf der aktiven Oberfläche des Werkstücks 36 ein Partikel 40. Unter aktiver Oberfläche sei hier derjenige Bereich des Werkstücks verstanden, der in nachfolgenden Stationen bestimmten Bearbeitungsprozessen ausgesetzt wird, z. B. dem Beschichten mit leitendem Muster bei der Herstellung von Mehrschicht-Keramikplatten. Das Vorhandensein des Partikels 40 hat zur Folge, daß die Sensorplatte 20 in diesem Bereich angehoben wird, so daß der Abstand zwischen Sensorplatte 20 und Haltejoch 14 von den Abtastelementen 26, 28 und 30 als unterschiedlich ermittelt wird. Entsprechende Signale zeigen somit an, daß dieses Werkstück entnommen und gereinigt werden muß.

Wie Fig. 1D zeigt, ist die dargestellte Vorrichtung aber auch wirksam, wenn sich ein Partikel 40 im inaktiven Bereich des Werkstücks 36, nämlich nahe seinem Rand, befindet. In diesem Fall gelangt die untere Fläche des Haltejoches 14 in unmittelbaren Kontakt mit dem Partikel 40 auf dem Werkstück 36, während die Sensorplatte 20 über die Flanschen 22, 24 in Kontakt mit dem Haltejoch 14 bleibt. Die Abtastelemente 26, 28 und 30 geben daher einheitliche Signale ab, jedoch wird das Absetzen des Haltekopfes 13 auf den Stiften 12 vorzeitig unterbrochen, und eine (nicht gezeigte) Kontrolleinrichtung zeigt an, daß sich im inaktiven Bereich des Werkstücks 36 Partikel befinden.

Bei den oben erläuterten Beispielen ist angenommen, daß sich Partikel jeweils auf dem Werkstück, im aktiven oder inaktiven Bereich, befinden. Die beschriebene Vorrichtung ist aber in gleicher Weise wirksam, wenn sich solche Partikel auf der Oberfläche der Grundplatte 10, nämlich zwischen der Filmschicht 38 und dem Werkstück 36 befinden; denn auch hier repräsentiert sich ein solcher Fall, sofern es sich um den Bereich der aktiven Werkstückfläche handelt, in der Lage der Sensorplatte 20 bzw., im andern Fall, durch das vorzeitige Unterbrechen der Zuführbewegung des Haltekopfes 13.

Bei der beschriebenen ersten Ausführungsform gemäß den Fign. 1A bis 1D können unterschiedliche Arten von Abtastelementen Verwendung finden, z. B. pneumatisch, mechanisch oder elektrisch wirksame Elemente. Die von ihnen abgegebenen Signale werden in üblicher Weise durch eine angeschlossene Auswerteschaltung verarbeitet, und zwar zeitlich abgestimmt mit dem Takt der Haltekopfbewegungen.

Eine gewisse Dämpfung der Bewegungen der Sensorplatte 20 kann durch die Dimensionierung der Federn 21 erreicht werden. Hierdurch wird insbesondere verhindert, daß die Sensorplatte 20 in Schwingungen gerät. In der einfachsten Ausführung sind jedoch die Federn entbehrlich, so daß die Sensorplatte 20 aufgrund der Schwerkraft in ihre jeweilige Wirkungsposition gelangt.

**Patentansprüche**

1. Einrichtung zur Prüfung plattenförmiger Werkstücke (36) auf Partikel (40), die aus der Oberfläche der Werkstücke herausragen, mit einer Grundplatte (10) und einem beweglichen Haltekopf (13) mit einer unteren Anlagefläche (32) zur Zufuhr und Entnahme der Werkstücke auf die bzw. von der Oberfläche der Grundplatte (10), dadurch gekennzeichnet, daß ein Haltejoch (14) vorgesehen ist, in dem beweglich gelagert eine auf der Oberfläche des Werkstücks (36) aufliegende Sensorplatte (20) und mehrere Abtastelemente (26, 28, 30) angeordnet sind, die die Abstände der Abtastelemente (26, 28, 30) zu der dem Werkstück (36) abgewandten Seite der Sensorplatte (20), und damit das Vorhandensein von Partikeln (40), bestimmen, und daß Mittel zur Auswertung der von den Abtastelementen (26, 28, 30) abgegebenen Signale vorgesehen sind.

2. Einrichtung nach Anspruch 1, dadurch gekennzeichnet, daß die Sensorplatte (20) mittels elastischer Elemente (21) gegen das Haltejoch (14) abgestützt ist, derart, daß sie unter ständig wirksamen elastischen Kräften auf dem Werkstück (36) aufliegt.

3. Einrichtung nach den Ansprüchen 1 oder 2, dadurch gekennzeichnet, daß die Abtastelemente (26, 28, 30) aus dem Haltejoch (14) in Richtung der Sensorplatte (20) herausragen.

**Claims**

1. Device for testing plate-shaped elements (36) for particles (40) protruding from the surface of the elements, with a base plate (10) and a movable pick-up head (13) with a lower surface (32) for loading and unloading the elements onto, or from the surface of the base plate (10), characterized in that
a yoke (14) with a movably supported sensor plate (20) put on the surface of the element (36), and with several sensor elements (26, 28, 30) is arranged, said elements determining the spacing between themselves and the side of the sensor plate (20) facing away from the element (36), and thus the presence of particles (40), and in that means for evaluating the signals supplied by the sensor elements (26, 28, 30) are provided.

2. Device as claimed in claim 1, characterized in that
the sensor plate (20) is supported by means of elastic elements (21) against the yoke (14), in such a manner that it is placed on the element (36) under continuously effective elastic forces.

3. Device as claimed in any one of claims 1 or 2, characterized in that
the sensor elements (26, 28, 30) protrude from the yoke (14) in the direction of the sensor plate (20).

**Revendications**

1. Dispositif pour un contrôle de pièces (36) en forme de plaques concernant des particules (40) qui font saillie de la surface des pièces, comportant un plateau de base (10) et une tête de retenue mobile (13) pourvue d'une surface inférieure d'appui (32) pour l'admission des pièces sur la surface du plateau de base (10) et pour leur évacuation de celle-ci, caractérisé en ce qu'il est prévu une culasse de retenue (14) dans laquelle sont disposés de façon mobile une plaque de détection (20) s'appliquant contre la surface de la pièce (36) et plusieurs éléments de palpage (26, 28, 30), qui déterminent les espacements des éléments de palpage (26, 28, 30) par rapport au côté, opposé à la pièce (36), de la plaque de détection (20) et par conséquent l'existence de particules (40) et en ce qu'il est prévu des moyens pour traiter les signaux produits par les éléments de palpage (26, 28, 30).

2. Dispositif selon la revendication 1, caractérisé en ce que la plaque de détection (20) est appuyée au moyen d'éléments élastiques (21) contre la culasse de retenue (14) de telle sorte qu'elle s'applique contre la pièce (36) sous l'effet de forces élastiques constamment actives.

3. Dispositif selon les revendications 1 ou 2, caractérisé en ce que les éléments de palpage (26, 28, 30) font saillie de la culasse de retenue (14) en direction de la plaque de détection (20).

FIG.1A

FIG.1B

SIGNAL
PROZESSOR

FIG.1C

FIG.1D